# EUROPEAN PATENT APPLICATION

(11) **EP 4 435 990 A1**
(43) Date of publication of application: **25.09.2024**
(21) Application number: 23307045.7
(22) Date of filing: 24.11.2023
(51) Int. Cl.: H02H 7/26, H02H 3/04, H02H 1/00, H02H 3/28

(54) **POWER DISTRIBUTION EQUIPMENT AND OPERATION METHOD THEREOF**

(30) Priority: 24.03.2023 CN 202310302055
(71) Applicant: SCHNEIDER ELECTRIC INDUSTRIES SAS, 92500 Rueil-Malmaison (FR)
(72) Inventor: YE, Qipeng, Shanghai 201203 (CN); GAO, Shen, Shanghai 201203 (CN); CHEN, Jiamin, Shanghai 201203 (CN); CHEN, Xiaohang, Shanghai 201203 (CN); XIA, Jiafei, Shanghai 201203 (CN)
(74) Representative: Manitz Finsterwald Patent- und Rechtsanwaltspartnerschaft mbB

(57) **Abstract**

The present disclosure relates to a power distribution equipment and an operation method thereof. The power distribution equipment includes: a main switch, a power supply end of which being connected to a power distribution network; at least one branch switch, a power supply end of each of the at least one branch switch being connected to a load end of the main switch through an internal bus in the power distribution equipment; a main measurement module that measures a total voltage and a total current associated with the main switch; at least one auxiliary measurement module, each of which measuring a branch current associated with one of the at least one branch switch; and a control module configured to determine an abnormality associated with a first branch switch of the at least one branch switch based on at least one of the total voltage, the total current and the branch current; and control a disconnection associated with the first branch switch in response to the abnormality. The current measurement precision of the main measurement module is higher than that of the at least one auxiliary measurement module. Each of the main switch and the at least one branch switch is a solid-state switch.

## Description

### TECHNICAL FIELD

The present disclosure relates to a power distribution equipment and an operation method thereof.

### BACKGROUND

The existing industrial and civil power distribution scheme is to provide an electrical protection device such as a circuit breaker and related accessories of the electrical protection device in a distribution box or cabinet. Such related accessories include, for example, voltage/current measurement module, monitoring module (realizing, for example, short-circuit current monitoring, leakage current monitoring, overvoltage and undervoltage monitoring, etc.), protection module (realizing, for example, short-circuit protection, leakage protection, overvoltage and undervoltage protection, etc.) and so on. If it is necessary to transmit voltage/current measurement data or monitoring data or others to the outside for remote monitoring and controlling, a communication module such as a gateway or router needs to be installed in the distribution box or cabinet, and the related accessories also need to include a wired module (for example, via RS485, CAN or Ethernet) or a wireless module (for example, via ZigBee or Bluetooth) for transmitting measurement data or monitoring data to the communication module. For each electrical protection device in the distribution box or cabinet, at least some of these related accessories need to be provided to realize controlling and protecting of the downstream power distribution lines or loads.

### SUMMARY

The present disclosure relates to a power distribution equipment and an operation method thereof, which can improve space utilization, reduce cost and provide fast and accurate protection for downstream power distribution lines or loads.

According to an aspect of the present disclosure, a power distribution equipment is provided, which comprises: a main switch, a power supply end of the main switch being connected to a power distribution network; at least one branch switch, a power supply end of each of the at least one branch switch being connected to a load end of the main switch through an internal bus in the power distribution equipment, and a load end of each of the at least one branch switch being connected to an electrical device; a main measurement module that measures a total voltage and a total current associated with the main switch; at least one auxiliary measurement module, each of which measuring a branch current associated with one of the at least one branch switch; and a control module configured to determine an abnormality associated with the first branch switch of the at least one branch switch based on at least one of the total voltage, the total current and the branch current; and control a disconnection associated with the first branch switch in response to determining the abnormality associated with the first branch switch. A current measurement precision of the main measurement module is higher than that of the at least one auxiliary measurement module. Each of the main switch and the at least one branch switch is a solid-state switch.

According to another aspect of the present disclosure, an operation method of a power distribution equipment is provided, which comprises: disconnecting, by a protection module, the main switch, when detecting an abnormality in a circuit associated with the main switch; determining, by the control module, that the abnormality is associated with a first branch switch of at least one branch switch based on at least one of a total voltage, a total current and branch current; controlling, by the control module, the first branch switch to be disconnected; and controlling, by the control module, the main switch to be connected.

The present disclosure provides a power distribution equipment and an operation method thereof, which can realize monitoring, controlling and protection of downstream power distribution lines or loads, reduce exposed wires in the power distribution equipment, and realize an abnormality detection by only providing a high-precision measurement module at the main switch and providing a low-precision measurement module for each branch switch, thus reducing the cost. In addition, there is no need to provide a protection module, a monitoring module, a transmission module and so on for each branch switch, thus reducing the number of required modules, improving space utilization, reducing cost, and providing fast and accurate protection for downstream power distribution lines or loads.

### BRIEF DESCRIPTION OF DRAWINGS

The aspects, features and advantages of the present disclosure will become clearer and easier to understand from the following description of the embodiments with reference to the accompanying drawings, wherein:
Fig. 1 shows a schematic diagram of a distribution box according to the prior art.
Fig. 2 shows a schematic diagram of a power distribution equipment according to an embodiment of the present disclosure.
Fig. 3 shows a flowchart of an operation method of a power distribution equipment according to an embodiment of the present disclosure.

### DETAILED DESCRIPTION

The present disclosure will be described in detail below with reference to exemplary embodiments thereof. However, the present disclosure is not limited to the embodiments described herein, and it may be implemented in many different forms. The described embodiments are only used to make the present disclosure thorough and complete, and fully convey the concept of the present disclosure to those skilled in the art. Features of the described embodiments may be combined or substituted with each other unless explicitly excluded or should be excluded according to the context.

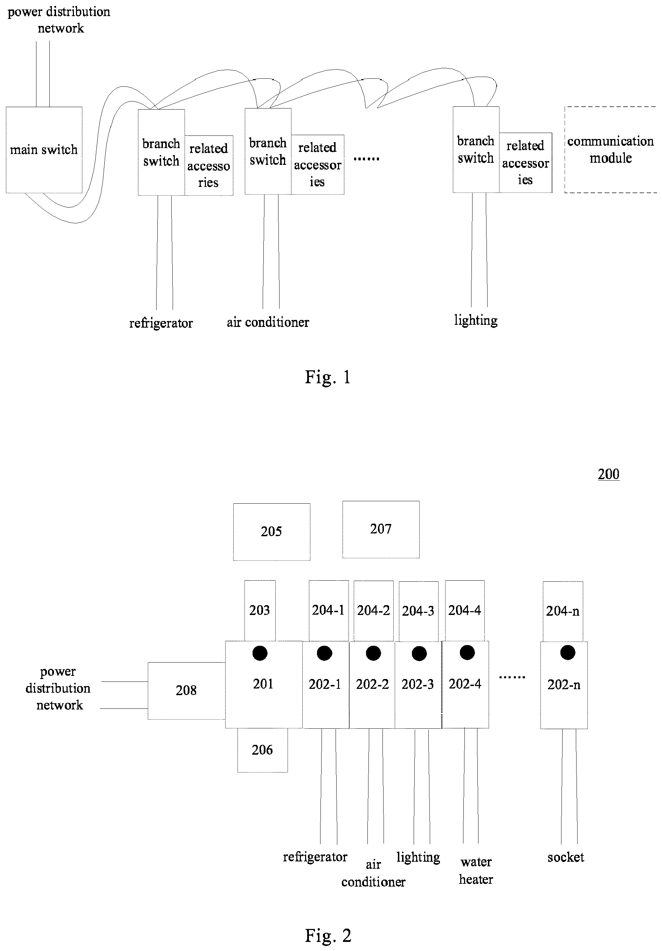

Fig. 1 shows a schematic diagram of a distribution box according to the prior art, which is used, for example, in a home. As shown in Fig. 1, a home distribution box according to the prior art is provided with a main switch and a plurality of branch switches. The main switch and the plurality of branch switches are electrical protection devices such as circuit breakers. A power supply end of the main switch is connected to a power distribution network, a load end of the main switch is connected to a power supply end of one of the branch switches, and power supply ends of individual branch switches are further connected one by one by jumper. A load end of each of the plurality of branch switches is connected with various electrical devices (i.e., downstream power distribution lines or loads), such as refrigerators, air conditioners, water heaters, sockets, lighting systems and so on, to provide monitoring, controlling and protection for these electrical devices. In order to realize such monitoring, controlling and protection, it is necessary to provide each branch switch with related accessories. Such related accessories include, for example, voltage/current measurement module, monitoring module (realizing, for example, short-circuit current monitoring, leakage current monitoring, overvoltage and undervoltage monitoring, etc.), protection module (realizing, for example, short-circuit protection, leakage protection, overvoltage and undervoltage protection, etc.) and so on. If it is necessary to transmit voltage/current measurement data or monitoring data or others to the outside for remote monitoring and controlling, a communication module such as a gateway or router needs to be installed in the distribution box or cabinet, and the related accessories also need to include a wired module (for example, via RS485, CAN or Ethernet) or a wireless module (for example, via ZigBee or Bluetooth) for transmitting measurement data or monitoring data to the communication module.

As described above, at present, it is necessary to provide each branch switch in the distribution box or cabinet with related accessories, which may cause the following problems: (1) power supply ends of individual branch switches are connected by jumper, resulting in more exposed wires in the distribution box; (2) there are many modules in each related accessory, and their installation and wiring are complicated; (3) it is necessary to realize high-precision measurement and various monitoring and protection in each relevant accessory, and the cost is high; (4) Numerous modules and wiring occupy a larger volume in the distribution box or cabinet, resulting in low space utilization; (5) if there are external communication requirements, it is necessary to provide additional transmission modules for each branch switch, which will further increase the cost.

Embodiments of the present disclosure provide a power distribution equipment and an operation method thereof, which can realize monitoring, controlling and protection of downstream power distribution lines or loads, reduce exposed wires, and realize an abnormality detection by only providing a high-precision measurement module at the main switch and providing a low-precision measurement module for each branch switch, thus reducing the cost. Moreover, embodiments of the present disclosure can provide fast and accurate protection for downstream power distribution lines or loads by using electronic switches such as solid-state switches as control switches. In addition, there is no need to provide a protection module, a monitoring module, a transmission module and so on for each branch switch, thus reducing the number of required modules, improving space utilization and reducing cost.

Fig. 2 shows a schematic diagram of a power distribution equipment 200 according to an embodiment of the present disclosure. As shown in Fig. 2, the power distribution equipment 200 may include a main switch 201, at least one branch switch 202-1 to 202-n (wherein n is a natural number greater than or equal to 1), a main measurement module 203, at least one auxiliary measurement module 204-1 to 204-n and a control module 205.

A power supply end of the main switch 201 can be connected to a power distribution network to obtain power. A load end of the main switch 201 can be connected to a power end of each of the at least one branch switch 202-1 to 202-n through an internal bus in the power distribution equipment 200 to provide power for it, and further provide power for electrical device connected to each of the at least one branch switch 202-1 to 202-n. As shown in Fig. 2, each of the at least one branch switch 202-1 to 202-n can be connected to an electrical device through its load end, and examples of these electrical devices include, for example, household refrigerators, air conditioners, water heaters, sockets, lighting systems, and various electrical devices in industry. For example, the main switch 201 and the at least one branch switch 202-1 to 202-n can be integrated on a printed circuit board (PCB), and the main switch and the at least one branch switch 202-1 to 202-n can be connected through an internal bus of the PCB.

In the power distribution equipment 200, the main switch 201 is connected with the at least one branch switch 202-1 to 202-n through the internal bus to provide power for it, without using a plurality of exposed wires for connection as in the existing distribution box shown in Fig. 1 (i.e., the load end of the main switch is connected with the power supply end of one of the branch switches, and power supply ends of individual branch switches are connected one by one by jumper). Therefore, exposed wires are avoided, wiring complexity is reduced, and space utilization is improved.

Each of the main switch 201 and the at least one branch switch 202-1 to 202-n may be a solid-state switch. Solid-state switches have the advantages of safe use and long life, and so on, and connecting and disconnecting speed of solid-state switches is much faster than that of mechanical switches, which enables to limit fault current quickly. At the same time, solid-state switches are more accurately controlled compared to mechanical switches, thus providing fast and accurate protection for downstream power distribution lines or loads.

In one embodiment, each of the main switch 201 and the at least one branch switch 202-1 to 202-n can also be a solid-state-mechanical hybrid switch, which can also realize fast connecting and disconnecting, thus providing fast and accurate protection for downstream power distribution lines or loads.

The main measurement module 203 may be associated with the main switch 201 for measuring a total voltage and a total current associated with the main switch 201. The main measurement module 203 can realize high-precision voltage measurement and current measurement, so as to find the abnormality in the circuit in time. The main measurement module 203 can include, for example, Rogowski coils, Hall sensors and so on. The cost of such devices is relatively high.

Each of the at least one auxiliary measurement module 204-1 to 204-n may measure a branch current associated with one of the at least one branch switch 202-1 to 202-n. For example, the at least one auxiliary measurement module 204-1 to 204-n may be associated with the at least one branch switch 202-1 to 202-n, respectively, and measure the associated current accordingly. For example, the auxiliary measurement module 204-1 can be associated with the branch switch 202-1 and measure the current associated with the branch switch 202-1, which is also associated with the electrical device to which the branch switch 202-1 is connected; the auxiliary measurement module 204-2 can be associated with the branch switch 202-2 and measure the current associated with the branch switch 202-2, which is also associated with the electrical device connected to the branch switch 202-2; the auxiliary measurement module 204-3 can be associated with the branch switch 202-3 and measure the current associated with the branch switch 202-3, which is also associated with the electrical device connected to the branch switch 202-3, and so on.

Compared with the main measurement module 203, each of the at least one auxiliary measurement module 204-1 to 204-n can achieve low-precision current measurement. That is, the current measurement precision of the main measurement module 203 may be higher than that of the at least one auxiliary measurement module 204-1 to 204-n. The at least one auxiliary measurement module 204-1 to 204-n can be, for example, a shunt resistor, whose cost is relatively low.

The power distribution equipment 200 according to embodiments of the present disclosure only needs to be equipped with related accessories (i.e., auxiliary measurement modules) of low-cost and low-precision for each of the branch switches 202-1 to 202-n. The control module 205 can determine whether an abnormality occurs in the circuit and a location of the abnormality based on the high-precision current and voltage values measured by the main measurement module 203 and based on the low-precision current values measured by each of the branch switches 202-1 to 202-n. Compared with the existing distribution box, which needs to set an associated high-precision measurement module for each branch to realize an abnormality detection, the power distribution equipment 200 according to embodiments of the present disclosure eliminates the need for the high-precision measurement module associated with each branch switch, and reduces the cost. In addition, since electronic switches such as solid-state switches are used as main switches and branch switches, the power distribution equipment 200 according to embodiments of the present disclosure enables to limit fault current quickly, and can provide fast and accurate protection for downstream power distribution lines or loads.

The control module 205 may be a micro-control unit (MCU), an integrated circuit (IC) or a module realized by combining software with hardware. The control module 205 can determine whether an abnormality occurs in the circuit and which branch switch the abnormality is associated with based on at least one of the total voltage and total current measured by the main measurement module 203 and each branch current measured by the at least one auxiliary measurement module 204-1 to 204-n. Further, after determining which branch switch the abnormality is associated with, the control module 205 can also control the disconnecting of the associated branch switch, thereby protecting the circuit associated with the branch switch and the whole circuit. For example, the control module 205 may determine that there is an abnormality associated with the branch switch 202-1 based on at least one of the total voltage, total current and the branch current described above. After determining that there is an abnormality associated with the branch switch 202-1, the control module 205 can also control the disconnection associated with the branch switch 202-1, thereby protecting the circuit associated with the branch switch 202-1 and the whole circuit.

The abnormalities in the circuit may include, for example, short circuit, leakage, overvoltage and undervoltage, arc fault, overload, etc. In one embodiment, the control module 205 may determine that there is a leakage or arc fault in the circuit based on the total current measured by the main measurement module 203, and may further determine that the leakage or arc fault is associated with the branch switch 202-1 based on the branch current associated with the branch switch 202-1 measured by the auxiliary measurement module 204-1. Leakage current and arc fault current are usually not very large or obvious, and it may not be possible to determine that a leakage or arc fault has indeed occurred in the circuit based only on the branch currents associated with individual branch switches, that is, determining a leakage or arc fault based only on the branch currents associated with the individual branch switches may result in a misjudgment. Therefore, the control module 205 needs to firstly determine that there is indeed a leakage or arc fault in the circuit based on the total current measured by the main measurement module 203. As described above, the measurement precision of the total current is high enough for the control module 205 to make a correct judgment. The control module 205 can determine that there is indeed a leakage current or an arc fault in the circuit based on the total current according to various known methods for detecting leakage current or arc fault current. For example, the control module 205 can determine that there is indeed a leakage or arc fault in the circuit based on a change of the total current. After determining that there is indeed a leakage or arc fault in the circuit, the control module 205 can further check the individual branch currents to determine which branch switch is associated with the circuit where the leakage or arc fault occurs. The control module 205 can determine which branch switch is associated with the circuit where the leakage current or arc fault occurs based on the individual branch currents according to various known methods for detecting leakage current or arc fault current. For example, if a change of the branch current associated with the branch switch 202-1 exceeds a leakage detection threshold or an arc detection threshold, the control module 205 may determine that the leakage or arc fault is associated with the branch switch 202-1. Further, the control module 205 can also control the disconnection associated with the branch switch 202-1, thereby protecting the circuit associated with the branch switch 202-1 and the whole circuit.

In one embodiment, the control module 205 may determine that there is a short circuit fault associated with the branch switch 202-1 based on the branch current associated with the branch switch 202-1. When a short circuit occurs, the current in the circuit usually changes greatly, thus the control module 205 can determine whether a short circuit occurs based on the measured low-precision branch current. The control module 205 may use various known short circuit detection methods to determine whether a short circuit has occurred in a circuit associated with a certain branch current (and a branch switch associated with the branch current) based on the individual branch currents. Further, the control module 205 can also control the disconnection associated with the branch switch 202-1, thereby protecting the circuit associated with the branch switch 202-1 and the whole circuit.

In one embodiment, the control module 205 may determine that there is an overvoltage or undervoltage fault associated with the branch switch 202-1 based on the total voltage measured by the main measurement module 203 and an operating voltage of an electrical device connected to the branch switch 202-1. Each of the at least one branch switch 202-1 to 202-n is internally connected with the main switch 201 through a bus, and the individual branch switches actually form a parallel relationship, thus the total voltage measured by the main measurement module 203 also corresponds to the voltage associated with each branch switch. The electrical device connected to each branch switch may have its own operating voltage, which may be a voltage range, beyond which the electrical device will not work normally or will be damaged. Therefore, if the total voltage measured by the main measurement module 203 does not match the operating voltage of the electrical device connected to the branch switch 202-1, the control module 205 can determine that there is an overvoltage or undervoltage fault associated with the branch switch 202-1. In one example, the total voltage measured by the main measurement module 203 may be 180V, and the electrical device connected to the branch switch 202-1 is an air conditioner with an operating voltage of 190V to 240V, that is, the air conditioner cannot work normally below 190V, which may even result in damaging of its internal modules. The total voltage above is lower than the operating voltage required by the electrical device connected to the branch switch 202-1. In this case, the control module 205 can determine that there is an undervoltage fault associated with the branch switch 202-1 based on the total voltage above and the operating voltage of the air conditioner. Further, the control module 205 can also control the disconnection associated with the branch switch 202-1, thereby protecting the circuit associated with the branch switch 202-1 (and the electrical device connected to the branch switch 202-1, which is the air conditioner in this example) and the whole circuit. In another example, the total voltage measured by the main measurement module 203 can be 250V, which is much greater than the operating voltage of the electrical device connected to each branch switch, then the control module 205 can determine that there is an abnormality in the incoming voltage of the power distribution network and that there is an overvoltage fault (which is associated with each of the branch switches), and can further control the main switch 201 to disconnect, so as to control and protect the whole circuit.

As described above, in the existing power distribution box, it is necessary to provide each branch switch with an associated protection module. The protection module is used to automatically disconnect the associated branch switch for protection when there is an abnormality in the circuit associated with the branch switch, such as short circuit, leakage, overvoltage and undervoltage. In addition, the protection module usually includes an absorption circuit for absorbing voltage surge and current surge in the circuit when the branch switch is disconnected or connected so as to avoid damaging the circuit. The cost of the absorption circuit is relatively high.

In one embodiment, as shown in Fig. 2, the power distribution equipment 200 may include a protection module 206 associated with the main switch 201, which may protect the main switch. The protection module 206 may disconnect the main switch 201 when detecting an abnormality in the circuit associated with the main switch 201. When abnormalities occur in the circuits associated with the branch switches, these abnormalities will also be reflected in the circuit associated with the main switch, so that the protection module 206 will disconnect the main switch 201 accordingly.

The protection module 206 may include various protection circuits, depending on the application environment and safety requirements of the power distribution equipment 200, including but not limited to: short circuit protection circuit, leakage protection circuit, overvoltage and undervoltage protection circuit, absorption circuit, arc protection circuit, overload protection circuit and so on. The circuits described above can realize short-circuit protection, leakage protection, overvoltage and undervoltage protection, voltage or current breakdown prevention when the main switch is connected or disconnected, arc fault protection and overload protection for the main switch 201 respectively. The cost of some of these circuits, such as absorption circuits, are relatively high.

It is worthy to note that the power distribution equipment 200 of the present disclosure realizes the overall protection at the head end (i.e., the main switch 201), and there is no need to set an associated protection module for each of the branch switches 202-1 to 202-n. The power distribution equipment of the present disclosure greatly saves the space and reduces the cost by eliminating setting of the associated protection module in each of the branch switches 202-1 to 202-n, respectively. Protection can be realized for each branch through the connecting and disconnecting of the main switch 201 and the branch switches 202-1 to 202-n realized by the control module 205 and the protection module 206 as described below.

As described above, when abnormalities occur in the circuits associated with the branch switches, these abnormalities will also be reflected in the circuit associated with the main switch, thus the protection module 206 will disconnect the main switch 201 accordingly. For example, when an abnormality such as the short circuit described above occurs in the circuit associated with the branch switch 202-1, the abnormality will be reflected in the circuit associated with the main switch, so that the protection module 206 will disconnect the main switch 201. When the main switch is disconnected, a voltage surge or a current surge may occur in the circuit, and the circuit in the protection module 206, such as the absorption circuit, can absorb the voltage surge or the current surge, thus protecting the disconnected main switch. At the same time, because of the disconnection of the main switch, each branch switch is also powered off, so that the related load in the abnormal circuit or the circuit associated with the branch switch 202-1 is also protected. As described above, the control module 205 may also determine that there is an abnormality in the circuit associated with the branch switch 202-1 based on at least one of the total voltage, the total current and the branch current. In addition, the control module 205 can also know the connection/disconnection state of the main switch. Therefore, the control module 205 can determine that there is an abnormality associated with the branch switch 202-1 and determine that the main switch 201 has been disconnected by the protection module 206. Then, the control module 205 can control the branch switch 202-1 to disconnect, so as to realize the isolation of the associated circuit where the abnormality exists. Then, the control module 205 can control the main switch 201 to connect, so as to restore the power supply to circuits where no abnormality has occurred. It can be understood that the control module 205 and the main switch 201 can receive power supply from the power distribution network through different circuits, so that the control module 205 is still supplied with power even when the protection module 206 disconnects the main switch 201, so as not to affect the control module 205 from carrying out the above-described operations, that is, to be informed of the connection/disconnection state of the main switch, to control the branch switch 202-1 to be disconnected, to control the main switch 201 to be connected, and so on.

It is worthy to note that, although in the process described above, the circuits where no abnormality has occurred will be disconnected temporarily because of disconnection of the main switch 201, since electronic switches such as solid-state switches are used as the main switch and branch switches described above, the duration of the process described above (i.e. the main switch 201 being disconnected-> the branch switch 202-1 being disconnected-> the main switch 201 being connected) is very short, approximately in the order of 1 millisecond, therefore, the influence on the circuits where no abnormality has occurred is very small and can be ignored, thus allowing for fast and accurate protection for downstream power distribution lines or loads without affecting their normal operation.

In one embodiment, if it is necessary to transmit data such as voltage/current measurement data to the outside for remote monitoring and controlling, the power distribution equipment 200 may further include a communication module 207 such as a gateway or a router. The control module 205 can communicate with the communication module 207 directly without the need of providing a wired module or a wireless module as in the existing distribution box. The control module 205 may transmit information associated with the power distribution equipment 200 to a remote client (not shown) via the communication module 207. The information associated with the power distribution equipment described above may include, but is not limited to, the total voltage measured by the main measurement module 203; the total current measured by the main measurement module 203; the branch current measured by the at least one auxiliary measurement module 204-1 to 204-n; the connection/disconnection state of the main switch 201; the connection/disconnection state of the at least one branch switch 202-1 to 202-n; statistical information, frequency information obtained based on the total voltage, the total current and the branch currents described above and so on.

In addition to transmitting data to the outside, the power distribution equipment 200 according to embodiments of the present disclosure can also receive data from the outside to realize remote control. In one embodiment, the control module 205 may receive control information from the remote client described above via the communication module 207 to control, for example, the connection/disconnection of the main switch 201 and/or the at least one branch switch 202-1 to 202-n.

In one embodiment, as shown in Fig. 2, the power distribution equipment 200 may further include a master isolation switch 208 connected between the power distribution network and the main switch 201. The master isolation switch 208 can cut off the connection between the power distribution network and the main switch, so that in case of a circuit failure, an operator can cut off the power, so as to conduct safe troubleshooting and repair.

It should be noted that although the present disclosure is mainly illustrated by taking the use of the power distribution equipment in a home as an example, the power distribution equipment of the present disclosure can be applied in both domestic and industrial environments. In addition, the power distribution network to which the power distribution equipment of the present disclosure is connected or applied is not limited to AC power grid, but may also include DC power grid. In the case of DC power grid, the electrical devices connected to individual branch switches can be DC equipment. For example, the power distribution network described above may be a power grid using new energy sources, such as a solar power grid, which outputs direct current. Accordingly, the electrical devices connected to individual branch switches can be, for example, photovoltaic cells. Therefore, compared with the existing distribution box which fixes the applicable power distribution network once air switches are configured, the power distribution equipment according to the present disclosure has a wider application field than the existing distribution box.

In one embodiment, it is also possible to realize local connection/disconnection control for the main switch 201 and/or the at least one branch switch 202-1 to 202-n, which can be realized, for example, by buttons or the like shown as black solid circles in Fig. 2.

The power distribution equipment according to embodiments of the present disclosure can realize the monitoring, controlling and protection of downstream power distribution lines or loads, reduce exposed wires, and realize an abnormality detection by only providing the high-precision measurement module at the main switch and providing the low-precision measurement module for each branch switch, thus reducing the cost. Moreover, embodiments of the present disclosure can provide fast and accurate protection for downstream power distribution lines or loads by using electronic switches such as solid-state switches as control switches. In addition, there is no need to provide a protection module, a monitoring module, a transmission module and so on for each branch switch, thus reducing the number of required modules, improving space utilization, reducing cost, and providing fast and accurate protection for downstream power distribution lines or loads.

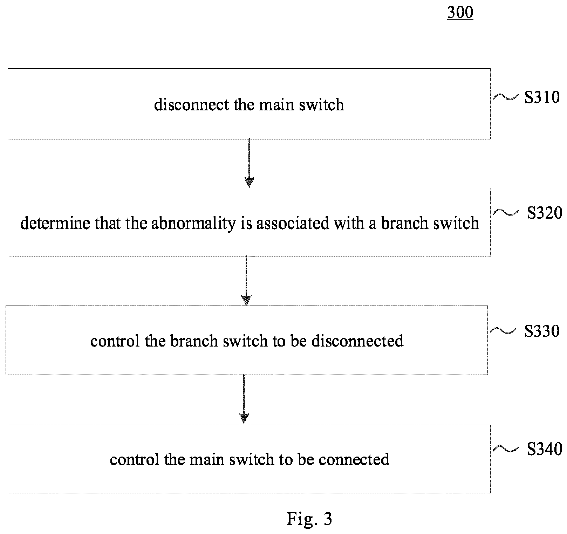

Fig. 3 shows a flowchart of an operation method 300 of a power distribution equipment according to an embodiment of the present disclosure. The operation method 300 may be performed by a power distribution equipment, such as the power distribution equipment 200 described above. The operation method 300 includes steps S310-S340. In step S310, the protection module 206 disconnects the main switch 201 when detecting an abnormality in the circuit associated with the main switch 201. In step S320, the control module 205 determines that the abnormality described above is associated with the branch switch 202-1 of the at least one branch switch 202-1 to 202-n based on at least one of the total voltage and total current measured by the main measurement module 203 and the branch current measured by the at least one auxiliary measurement module 204-1 to 204-n. In step S330, the control module 205 controls the branch switch 202-1 to be disconnected. In step S340, the control module 205 controls the main switch 201 to be connected.

In one embodiment, the control module 205 determining that the abnormality described above is associated with the branch switch 202-1 of the at least one branch switch 202-1 to 202-n based on at least one of the total voltage and total current measured by the main measurement module 203 and the branch current measured by the at least one auxiliary measurement module 204-1 to 204-n may include: determining that there is a leakage fault or an arc fault based on the total current; and determining that the leakage fault or the arc fault is associated with the branch switch 202-1 based on the branch current associated with the branch switch 202-1.

In one embodiment, the control module 205 determining that the abnormality described above is associated with the branch switch 202-1 of the at least one branch switch 202-1 to 202-n based on at least one of the total voltage and total current measured by the main measurement module 203 and the branch current measured by at least one auxiliary measurement module 204-1 to 204-n may include: determining that there is a short circuit fault associated with the branch switch 202-1 based on the branch current associated with the branch switch 202-1.

In one embodiment, the control module 205 determining that the abnormality described above is associated with the branch switch 202-1 of the at least one branch switch 202-1 to 202-n based on at least one of the total voltage and total current measured by the main measurement module 203 and the branch current measured by at least one auxiliary measurement module 204-1 to 204-n may include: determining that there is an overvoltage or undervoltage fault associated with the branch switch 202-1 based on the total voltage and the operating voltage of the electrical device connected to the branch switch 202-1.

In one embodiment, the operation method 300 further includes disconnecting the main switch 201 by the protection module 206 associated with the main switch when detecting an abnormality in the circuit associated with the main switch 201.

In one embodiment, the operation method 300 further includes sending, by the control module 205, information associated with the power distribution equipment to the remote client via the communication module.

In one embodiment, the operation method 300 further includes receiving, by the control module 205, control information from the remote client via the communication module to control the connection/disconnection of the main switch and/or the at least one branch switch.

The operation method according to embodiments of the present disclosure can realize the monitoring, controlling and protection of downstream power distribution lines or loads, reduce exposed wires, and realize an abnormality detection by only providing the high-precision measurement module at the main switch and providing the low-precision measurement module for each branch switch, thus reducing the cost. Moreover, embodiments of the present disclosure can provide fast and accurate protection for downstream power distribution lines or loads by using electronic switches such as solid-state switches as control switches. In addition, there is no need to provide a protection module, a monitoring module, a transmission module and so on for each branch switch, thus reducing the number of required modules, improving space utilization, reducing cost, and providing fast and accurate protection for downstream power distribution lines or loads.

It should be noted that although the steps are described above in a specific order, this should not be understood as requiring that the steps should be performed in the described specific order or sequence.

The block diagrams of devices, equipment and systems involved in the present disclosure are only exemplary, and are not intended to require or imply that they must be connected, arranged and configured in the manner shown in the block diagrams. As those skilled in the art will recognize, these circuits, components, devices, equipment and systems can be connected, arranged and configured in any way, as long as the desired purpose can be achieved.

The processes and logic flows described in this specification can be performed by one or more programmable processors that execute one or more computer programs to perform functions by operating on input data and generating output. Processes and logic flows can also be performed by dedicated logic circuits, and devices can also be implemented as dedicated logic circuits, such as FPGA (Field Programmable Gate Array) or ASIC (Application Specific Integrated Circuit).

Although the operations are described in a specific order in the drawings, this should not be understood as requiring that these operations should be performed in the described specific order or sequence, or that all the illustrated operations should be performed to achieve the desired results. In some cases, multitasking and parallel processing may be beneficial.

Certain features described in this specification in the context of a single embodiment may also be combined. On the contrary, various features described in the context of a single embodiment can also be implemented separately or in any suitable subcombination in multiple embodiments.

It should be understood by those skilled in the art that the specific embodiments described above are only examples rather than limitations, and various modifications, combinations, partial combinations and substitutions can be made to the embodiments of the present disclosure according to design requirements and other factors, as long as they are within the scope of the appended claims or their equivalents, that is, they belong to the protection scope claimed by the present disclosure.

## Claims

1. A power distribution equipment, comprising:
a main switch, a power supply end of the main switch being connected to a power distribution network;
at least one branch switch, a power supply end of each of the at least one branch switch being connected to a load end of the main switch through an internal bus in the power distribution equipment, and a load end of each of the at least one branch switch being connected to an electrical device;
a main measurement module that measures a total voltage and a total current associated with the main switch;
at least one auxiliary measurement module, each of which measuring a branch current associated with one of the at least one branch switch; and
a control module configured to:
determine an abnormality associated with the first branch switch of the at least one branch switch based on at least one of the total voltage, the total current and the branch current; and
control a disconnection associated with the first branch switch in response to determining the abnormality associated with the first branch switch,
wherein a current measurement precision of the main measurement module is higher than that of the at least one auxiliary measurement module, and each of the main switch and the at least one branch switch is a solid-state switch.

2. The power distribution equipment of claim 1, wherein the control module determining the abnormality associated with the first branch switch of the at least one branch switch based on at least one of the total voltage, the total current and the branch current comprises:
determining that there is a leakage fault or an arc fault based on the total current; and
determining that the leakage fault or the arc fault is associated with the first branch switch based on the branch current associated with the first branch switch.

3. The power distribution equipment of claim 1, wherein the control module determining the abnormality associated with the first branch switch of the at least one branch switch based on at least one of the total voltage, the total current and the branch current comprises:
determining that there is a short circuit fault associated with the first branch switch based on the branch current associated with the first branch switch.

4. The power distribution equipment of claim 1, wherein the control module determining the abnormality associated with the first branch switch of the at least one branch switch based on at least one of the total voltage, the total current and the branch current comprises:
determining that there is an overvoltage or undervoltage fault associated with the first branch switch based on the total voltage and an operating voltage of the electrical device connected with the first branch switch.

5. The power distribution equipment of claim 1, further comprising a protection module associated with the main switch, wherein the protection module is configured to disconnect the main switch when detecting an abnormality in a circuit associated with the main switch.

6. The power distribution equipment of claim 5, wherein the protection module comprises at least one of the following: a short circuit protection circuit, a leakage protection circuit, an overvoltage and undervoltage protection circuit, an absorption circuit, an arc protection circuit and an overload protection circuit.

7. The power distribution equipment of claim 5, wherein the control module controlling the disconnection associated with the first branch switch in response to determining the abnormality associated with the first branch switch comprises:
determining that the main switch has been disconnected by the protection module;
controlling the first branch switch to be disconnected; and
controlling the main switch to be connected.

8. The power distribution equipment of claim 1, further comprising a communication module, wherein the control module is further configured to send information associated with the power distribution equipment to a remote client via the communication module.

9. The power distribution equipment of claim 8, wherein the information associated with the power distribution equipment comprises at least one of the total voltage, the total current, the branch current, a connection/disconnection state of the main switch, and a connection/disconnection state of the at least one branch switch.

10. The power distribution equipment of claim 8, wherein the control module is further configured to receive control information from the remote client via the communication module to control a connection/disconnection of the main switch and/or the at least one branch switch.

11. The power distribution equipment of claim 1, further comprising a master isolation switch connected between the power distribution network and the main switch.

12. The power distribution equipment of claim 1, wherein the power distribution network is an AC power grid or a DC power grid.

13. An operation method of a power distribution equipment of any one of claims 1-12, comprising:
disconnecting, by a protection module, the main switch when detecting an abnormality in a circuit associated with the main switch;
determining, by the control module, that the abnormality is associated with a first branch switch of the at least one branch switch based on at least one of the total voltage, the total current and the branch current;
controlling, by the control module, the first branch switch to be disconnected; and
controlling, by the control module, the main switch to be connected.
